# EUROPEAN PATENT APPLICATION

(11) **EP 2 028 847 A2**
(43) Date of publication of application: **25.02.2009**
(21) Application number: 08162773.9
(22) Date of filing: 21.08.2008
(51) Int. Cl.: H04N 5/44, H04N 5/50

(54) **Digital broadcast receiving apparatus**

(30) Priority: 22.08.2007 JP 2007215442
(71) Applicant: Funai Electric Co., Ltd., Daito-shi Osaka 574-0013 (JP)
(72) Inventor: Tokoshima, Susumu, C/O FUNAI ELECTRIC CO., LTD., Osaka 574-0013 (JP)
(74) Representative: Beetz & Partner

(57) **Abstract**

A digital broadcast receiver which utilizes a receivable channel with good convenience includes: a receiving availability judging portion 111 which judges receiving availability of a television broadcast of a frequency band corresponding to each of physical channels stored in a frequency storing portion 121 via a receiving portion 14; a country name obtaining portion 112 which, in case where a television broadcast is judged to be receivable, obtains a country name identifying information with respect to logical channel numbers via the receiving portion 14: the LCNs are contained in a frequency band corresponding to the physical channel and corresponds to channel numbers selected by a user, the country name identifying information identifies a country name of a country of target viewers of the television broadcast corresponding to each LCN live; and a country name recording portion 113 which records the obtained country name identifying information in a channel storing portion 122 such that the information is associated with a physical channel number information and logical channel number information.

## Description

### BACKGROUND OF THE INVENTION

### Field of the Invention

The present invention relates to a digital broadcast receiving apparatus, in particular, a digital broadcast receiving apparatus which receives a digital television broadcast and is connected to a monitor to display the received video information. Description of Related Art

In a broadcast receiving apparatus which is structured so that it receives a television broadcast, and is capable of outputting the broadcast to be viewed from outside, has a function of channel preset in which a receivable frequency band is scanned, for example, from lower end to higher end, and channels in that a television broadcast can be received are registered in an inner memory as preset channels.

To achieve effectively the above described channel preset, various apparatus, method and the like are proposed. In JP-A-H8-195914, for example, a channel selecting device is disclosed in which a microprocessor refers to corresponding relation of country or language, and priority order of format to be searched that are stored in a memory and searches broadcasting station code in compliance with the referred priority order when user inputs country information and language information by a remote commander or a key input circuit.

However, in the conventional broadcast receiving apparatus which is provided with the above described channel selecting device or the like, because the channel selection is performed for only channels that agree with country information and the like which are preset in advance, it is difficult to receive a channel that does not agree with the country information and the like which are preset in advance even in a state where a channel that does not agree with the country information and the like which are preset in advance can be received. That is, to receive a channel that does not agree with the country information and the like which are preset in advance, it is necessary to newly set the country information of a television broadcast that is desired to receive. Therefore, operation is complicated and it is difficult to utilize all the receivable channels with good convenience.

### SUMMARY OF THE INVENTION

The present invention is made in view of the above described problem and it is an object of the present invention to provide a digital broadcast receiving apparatus which can utilize the receivable channels with good convenience.

To attain the above described object a digital broadcast receiving apparatus according to a first aspect of the present invention is a digital broadcast receiving apparatus which receives a digital television broadcast and displays the received video information on a monitor, includes: a receiving means which receives a television broadcast of frequency band that is set in advance; a frequency storing means which stores in advance a plurality of frequency band information such that each of the plurality of frequency band information are associated with a physical channel number information, a physical channel number being a channel number regulating a frequency band; a receiving availability judging means which judges whether a television broadcast can be received via the receiving means with respect to a frequency band of each of physical channels stored in the frequency storing means; a country name obtaining means which, in case where the receiving availability judging means judges a television broadcast can be received, obtains a country name identifying information via the receiving means with respect to each of logical channel numbers (LCNs): the LCNs being contained in a frequency band corresponding to the physical channel and corresponding to channel numbers selected by a user, the country name identifying information identifying a country name of a country where target viewers of a television broadcast corresponding to each of the LCNs live; a channel storing means which associates the physical channel number information and logical channel number information that correspond to a receivable television broadcast with the country name identifying information and stores them; and a country name recording means which associates the country name identifying information obtained by the country name obtaining means with the physical channel number information and the logical channel number information and records them in the channel storing means.

The digital broadcast receiving apparatus according to a second aspect of the present invention is **characterized in that** the country name obtaining means may obtain the country name identifying information based on a country code (country_code) information which is contained in Time Offset Table (TOT) information that is a table to regulate standard time for every country in the digital broadcast receiving apparatus according to the above described first aspect.

The digital broadcast receiving apparatus according to a third aspect of the present invention may include: a country name storing means which stores in advance at least one country name identifying information as a viewer country name information that is the country name identifying information of the country corresponding to a television broadcast which user desires to view; a number extracting means which extracts a logical channel number information associated with a country name identifying information which is the same as the at least one country name identifying information that is stored in the country name storing means from the logical channel number information which are stored in the channel storing means; and a display control means which displays the logical channel number information that is extracted by the number extracting means on the monitor based on a command input which is received from outside in the digital broadcast receiving apparatus according to the above described first or second aspect.

The digital broadcast receiving apparatus according to a fourth aspect of the present invention may further include a channel setting means which sets one of the logical channel number information displayed on the monitor by the display control means as a logical number information to display video information based on a command input received from outside in the digital broadcast receiving apparatus according to the above described third aspect.

The digital broadcast receiving apparatus according to a fifth aspect of the present invention is **characterized in that** the country name storing means may store in advance the plurality of country name identifying information; the apparatus may further comprise a country name selecting means which selects one of the plurality of country name identifying information stored in the country name storing means based on a command input received from outside; and the number extracting means may extract logical channel number information associated with a country name identifying information that is the same as the country name identifying information which is selected by the country name selecting means in the digital broadcast receiving apparatus according to the above described third or fourth aspect.

The digital broadcast receiving apparatus according to a sixth aspect of the present invention may further including: a country name storing means which stores in advance the plurality of country name identifying information as viewer country name information being the country name identifying information of countries which correspond to television broadcasts that a user desires to view; a country name selecting means which selects one of the country name identifying information stored in the country name storing means based on a command input received from outside; and a channel changing means which, in case where a command input to increase a displayed channel number which is one of the logical channel numbers to display image on the monitor is received from outside, sets one of the logical channel number information stored in the channel storing means as the displayed channel number, the set logical channel number having a channel number which is larger than that of the logical channel number being selected as the displayed channel number, the set logical channel number being associated with a country name identifying information which is the same as the selected country name identifying information by the country name selecting means, and the set logical channel number having the smallest absolute value of difference between a channel number thereof and that of the logical channel number being selected in the digital broadcast receiving apparatus according to the above described first or second aspect.

The digital broadcast receiving apparatus according to a seventh aspect of the present invention is **characterized in that** in case where a command input to decrease a displayed channel number which is one of the logical channel numbers to display image on the monitor is received from outside, the channel changing means may set one of the logical channel number information stored in the channel storing means as a displayed channel number, the set logical channel number information having a channel number which is smaller than that of the logical channel number being selected as the displayed channel number, the set logical channel number information being associated with a country name identifying information which is the same as the selected country name identifying information by the country name selecting means, and the set logical channel number information having a smallest absolute value of difference between a channel number thereof and that of the logical channel number being selected in the digital broadcast receiving apparatus according to the above described sixth aspect.

The digital broadcast receiving apparatus according to as eighth aspect of the present invention is **characterized in that** every time the country name obtaining means obtains the country name identifying information, the country name recording means may record the obtained country name identifying information in the country name storing means in the digital broadcast receiving apparatus according to the above described third to seventh aspect.

The digital broadcast receiving apparatus according to a ninth aspect of the present invention is **characterized in that** the receiving availability judging means may judge that television broadcast can be received in case where Bit Error Rate (BER) of broadcasting wave received via the receiving means is not more than a prescribed threshold value set in advance in the digital broadcast receiving apparatus according to the above described first to eighth aspect.

According to the digital broadcast receiving apparatus according to the first aspect of the present invention, a plurality of frequency band information are stored in advance in a frequency storing means such that each of the plurality of frequency band information are associated with a physical channel number information that is a channel number which regulate a frequency band; and a receiving availability of a television broadcast of a frequency band corresponding to a physical channel is judged with respect to each of physical channels stored in the frequency storing means via a receiving means for receiving television broadcasts of frequency bands set in advance. Then, in case where it is judged that it is receivable, the country name identifying information that identifies a country name of a country where target viewers of a television broadcast corresponding to a logical channel number live is obtained via the receiving means with respect to each of logical channel numbers (LCNs) contained in a frequency hand corresponding to the physical channel and corresponding to channel numbers selected by a user; the obtained country name identifying information is associated with the physical channel number information and the logical channel number information and recorded in the channel storing means. As a result, the receivable channel can be utilized with good convenience.

That is, because the country name identifying information that identifies a country name of a country where target viewers of a receivable television broadcast live is obtained, and the obtained country name identifying information is associated with the physical channel number information and the logical channel number information and recorded in the channel storing means, it becomes possible for user to view a television broadcast which includes a desired country name identifying information by designating a logical channel number information with reference to the country name identifying information that is stored in the channel storing means. As a result the receivable channel can be utilized with good convenience.

According to the digital broadcast receiving apparatus according to the second aspect of the present invention, the country name identifying information is obtained based on country code information which is contained in TOT information that is a table to regulate standard time for every country. As a result, accurate country information can be easily obtained, and the receivable channel can be utilized with better convenience.

That is, because the country code (country_code) information is contained (see, ETSI EN 300 468 V1.7.1(2006-05)) in Local time offset descriptor to show offset time of the Time Offset Table (TOT) information which is a table to regulate standard time for every country as it is defined in European Telecommunications Standards Institute (ETSI) that is standard for digital broadcasting in Europe, the country name identifying information is obtained based on the country code information that is contained in the TOT information. As a result, accurate country information can be obtained easily.

According to the digital broadcast receiving apparatus according to the third aspect of the present invention, at least one country name identifying information is stored in advance in the country name storing means as viewer country name information that is the country name identifying information of a country corresponding to a television broadcast which user desires to view; and logical channel number information associated with a country name identifying information which is the same as the country name identifying information that is stored in the country name storing means from the logical channel number information which are stored in the channel storing means are extracted. Then, the extracted logical channel number information are displayed on the monitor based on a command input which is received from outside. As a result, the receivable channel can be utilized with better convenience.

That is, because the logical channel number information associated with a country name identifying information which is the same as the country name identifying information that is stored in the country name storing means are extracted from the logical channel number information which are stored in the channel storing means, and the extracted logical channel number information are displayed on the monitor based on the command input from outside, it becomes possible for user to view easily the television broadcast which the user desires to view by storing in advance the country name identifying information of the television broadcast which is desired to view in the channel storing means. As a result, the receivable channel can be utilized with better convenience.

According to the digital broadcast receiving apparatus according to the fourth aspect of the present invention, one logical channel number information is set as a logical channel number information to display a video information from the logical channel number information that are displayed on the monitor based on the command input which is received from outside. As a result, the receivable channel can be utilized with better convenience.

That is, because logical channel number information of a television broadcast which includes a country name identifying information which user desires to view are displayed on the monitor, and one logical channel number information is set as a logical channel number information to display a video information from the logical channel number information which are displayed on the monitor, the television broadcast which includes the country name identifying information that the user desires to view can be easily viewed. As a result, the receivable channel can be utilized with better convenience.

According to the digital broadcast receiving apparatus according to the fifth aspect of the present invention, a plurality of country name identifying information are stored in advance in the country name storing means; one country name identifying information is selected from the plurality of country name identifying information that are stored in the country name storing means based on a command input which is received from outside; logical channel number information associated with a country name identifying information that is the same as the selected country name identifying information are extracted; and the extracted logical channel number information are displayed on the monitor. As a result, the receivable channel can be utilized with better convenience.

That is, in case where there are a plurality of country name identifying information of television broadcasts which a user desires to view, if the plurality of country name identifying information are stored in advance in the channel storing means and one of the country name identifying information stored in the country name storing means is selected, logical channel number information associated with a country name identifying information that is the same as the selected country name identifying information are extracted; and the extracted logical channel number information are displayed on the monitor, the television broadcast which includes the country name identifying information that the user desires to view can be easily viewed. As a result, the receivable channel can be utilized with better convenience.

According to the digital broadcast receiving apparatus according to the sixth aspect of the present invention, a plurality of country name identifying information are stored in advance in the country name storing means as viewer country name information that are country name identifying information of countries which correspond to television broadcasts that a user desires to view; and one country name identifying information is selected from the plurality of country name identifying information that are stored in the country name storing means based on a command input which is received from outside. Then, in case where a command input that means to increase a displayed channel number which is a logical channel number to display image on the monitor is received from outside, one of logical channel number information stored in the channel storing means is set as the displayed channel number, the set logical channel number having a channel number which is larger than that of a logical channel number being selected as the displayed channel number, the set logical channel number being associated with a country name identifying information which is the same as the country name identifying information selected from the plurality of country name identifying information stored in the country name storing means, and the set logical channel number having the smallest absolute value of difference between a channel number thereof and that of the logical channel number being selected. As a result, the receivable channel can be utilized with better convenience.

That is, in case where a command input that means to increase a displayed channel number is received, because logical channel number information having a country name identifying information which is the same as the country name information selected from the logical channel number information stored in the channel storing means are set sequentially, it becomes possible for a user to set sequentially (in ascending order) logical channel number information corresponding to a television broadcast that contains a country name identifying information which the user desires to view by performing a command input that means to increase a displayed channel number. As a result, the receivable channel can be utilized with better convenience.

According to the digital broadcast receiving apparatus according to the seventh aspect of the present invention, in case where a command input that means to decrease a displayed channel number which is a logical channel number to display image on the monitor is received from outside, one of the logical channel number information stored in the channel storing means is set as the displayed channel number, the set logical channel number having a channel number which is smaller than that of a logical channel number being selected as the displayed channel number, the set logical channel number being associated with a country name identifying information which is the same as the country name identifying information selected from the plurality of country name identifying information stored in the country name storing means, and the set logical channel number having the smallest absolute value of difference between a channel number thereof and that of the logical channel number being selected. As a result, the receivable channel can be utilized with better convenience.

That is, in case where a command input that means to decrease a displayed channel number is received, because logical channel number information having a country name identifying, information which is the same as the country name information selected from the logical channel number information stored in the channel storing means are set sequentially, it becomes possible for a user to set sequentially (in descending order) logical channel number information corresponding to a television broadcast that contains a country name identifying information which the user desires to view by performing a command input that means to decrease a displayed channel number. As a result, the receivable channel can be utilized with better convenience.

According to the digital broadcast receiving apparatus according to the eighth aspect of the present invention, every time a country name identifying information is obtained, the obtained country name identifying information is recorded in the country name storing means. As a result, because it is not necessary for user to store the country name identifying information of the television broadcast which the user desires to view in the country name storing means, the receivable channel can be utilized with better convenience.

According to the digital broadcast receiving apparatus according to the ninth aspect of the present invention, it is judged that a television broadcast can be received in case where Bit Error Rate of broadcasting wave received via the receiving means is not more than a prescribed threshold value set in advance. As a result, because receiving availability is judged accurately and easily the receivable channel can be utilized with better convenience.

### BRIEF DESCRIPTION OF THE DRAWINGS

Fig. 1 is a block diagram to show one example of structure of a digital broadcast receiver in accordance with the present invention;
Fig. 2 is a front view to show one example of a remote controller;
Fig. 3 is a block diagram to show one example of structure of a principal part of the digital broadcast receiver in accordance with the present invention;
Fig. 4A is a graphic chart to show one example of a channel list which is stored in a channel storing portion;
Fig. 4B is a graphic chart to show one example of logical channel number information which are displayed in selectable manner on a display by a display control portion;
Fig. 4C is a graphic chart to show one example of the logical channel number information which are displayed in selectable manner on the display by the display control portion;
Fig. 5 is a graphic chart to show one example of a sorted list which corresponds to the channel list that is shown in Fig. 4A;
Fig. 6 is a flowchart to show one example of a channel list generating process of the digital broadcast receiver (mainly MPU);
Fig. 7 is a flowchart (former half part) to show one example of a channel setting change process of the digital broadcast receiver (mainly MPU); and
Fig. 8 is a flowchart (latter half part) to show one example of the channel setting change process of the digital broadcast receiver (mainly MPU).

### DETAILED DESCRIPTION OF PREFERRED EMBODIMENTS

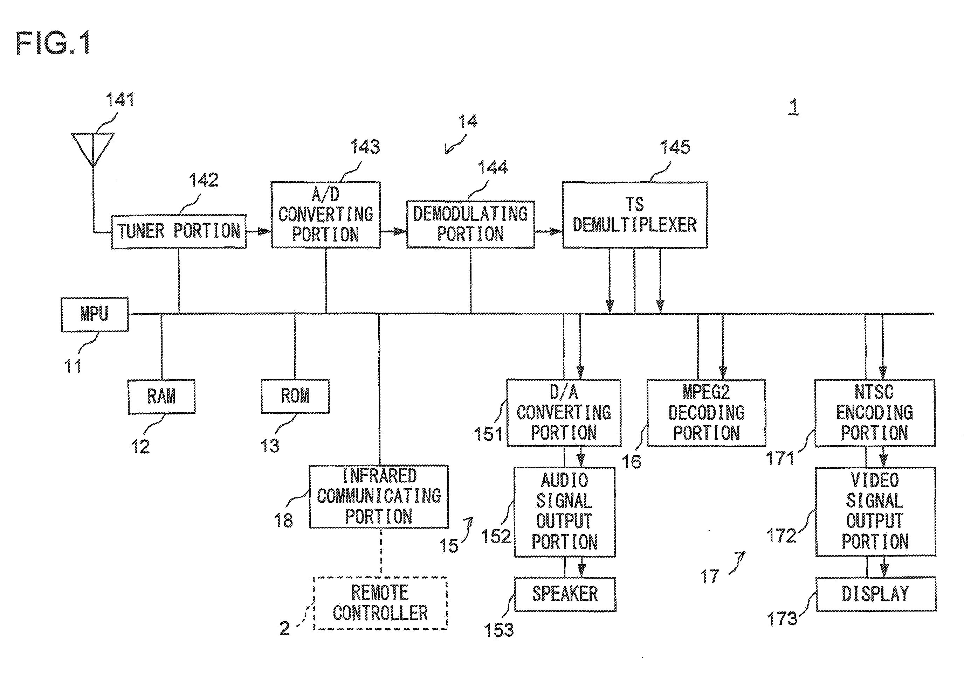

Hereinafter an embodiment of the present invention will be explained with reference to the drawings. Fig. 1. is a block diagram to show one example of structure of a digital broadcast receiver 1 in accordance with the present invention. The digital broadcast receiver 1 (corresponding to a digital broadcast receiving apparatus) is connected to a remote controller 2 in communicatable manner via infrared communication.

The digital broadcast receiver 1 receives command input from user via the remote controller 2, and receives a television broadcast to output image to a display 173 and sound to a speaker 153, respectively. The digital broadcast receiver 1 is provided with a Micro Processing Unit (MPU) 11, a Random Access Memory (RAM) 12, a Read Only Memory (ROM) 13, a receiving portion 14, a sound output portion 15, a Motion Picture Experts Group (MPEG) 2 decoding portion 16, a video output portion 17, and an infrared communicating portion 18.

The MPU 11 controls whole operation of the digital broadcast receiver 1. The RAM 12 stores information such as sound information, video information, and the like in readable and writable manners. The ROM 13 stores a control program and the like to operate the MPU 11.

The receiving portion 14 (corresponding to a receiving means) receives a television broadcast and demodulates it. The receiving portion 14 is provided with an antenna portion 141, a tuner portion 142, an Analog/Digital (A/D) converting portion 143, a demodulating portion 144, and a Transport Stream (TS) demultiplexer 145.

The antenna portion 141 receives a television broadcast wave. The tuner portion 142 selects a channel broadcast set in advance from the received television broadcast wave by the antenna portion 141. The A/D converting portion 143 converts an output signal (analog signal) from the tuner portion 142 into digital information. The demodulating portion 144 demodulates the output information from the A/D converting portion 143. The TS demultiplexer 145 separates the output information which is demodulated by the demodulating portion 144 with respect to kinds to output.

The sound output portion 15 outputs sound which corresponds to the television broadcast that is received by the receiving portion 14. The sound output portion 15 is provided with a Digital/Analog (D/A) converting portion 151, an audio signal output portion 152, and a speaker 153. The D/A converting portion 151 converts the audio information (digital information) which is output from the TS demultiplexer 145 into analog signal. The audio signal output portion 152 outputs the audio signal which is converted into the analog signal by the D/A converting portion 151. The speaker 153 outputs sound which corresponds to the audio signal that is output from the audio signal output portion 152.

The MPEG2 decoding portion 16 decodes the video information which is output from the TS demultiplexer 145 to video information before compression.

The video output portion 17 outputs the video information which is decoded by the MPEG2 decoding portion 16. The video output portion 17 is provided with a National Television Standards Committee (NTSC) encoding portion 171, a video signal output portion 172, and a display 173. The NTSC encoding portion 171 converts the video information which is decoded by the MPEG2 decoding portion 16 into a television signal in the NTSC system. The video signal output portion 172 outputs the television signal in the NTSC system which is output from the NTSC encoding portion 171 to the display 173. The display 173 (corresponding to a monitor) is composed of a Liquid Crystal Display (LCD), a Plasma Display Panel (PDP) or the like, and it displays image that corresponds to the television signal which is output from the video signal output portion 172.

The infrared communicating portion 18 receives various kinds of operation such as ON-OFF operation of power, channel selection, various kinds of settings of the digital broadcast receiver 1 and the like from the remote controller 2.

Next, explanation will be given about an operation in case where the digital broadcast receiver 1 receives a broadcast. First, transmitted digital broadcast wave is received by the antenna portion 141. When tuning operation is received through the remote controller 2, the tuner portion 142 switches transponders to receive the broadcast. The received digital broadcast wave is converted into digital information by the A/D converting portion 143 and is demodulated by the demodulating portion 144.

The digital broadcast wave is transmitted as a TS packet from transmitting side (transmitting station). This TS packet contains the video information, the audio information, control information, and the like, and these information are separated by the TS demultiplexer 145 and output to the RAM 12 to be stored. Then, the audio information which is read out from the RAM 12, is converted into analog signal by the D/A converting portion 151, and sound is output from the speaker 153 through the audio signal output portion 152.

Further, the video information which is read out from the RAM 12, is decoded to video information that is before compression by the MPEG2 decoding portion 16, then it is converted into television signal in the NTSC system by the NTSC encoding portion 171 and image is displayed on the display 173 through the video signal output portion 172.

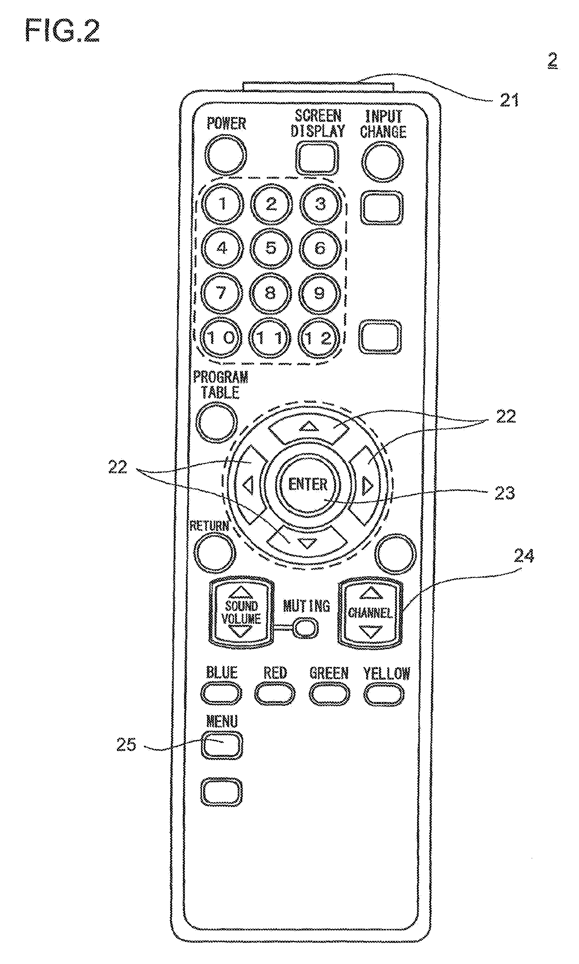

Fig. 2 is a front view to show one example of the remote controller 2. The remote controller 2 (corresponding to a part of country name selecting means, a part of channel setting means, a part of channel changing means, and a part of display control means) receives command input from the user, generates an infrared signal corresponding to the command input and outputs the signal to the digital broadcast receiver 1. The remote controller 2 is provided with an infrared signal output portion 21, direction keys 22, an enter key 23, a channel change key 24, a menu key 25, and the like. The infrared signal output portion 21 generates a command signal which corresponds to a key that is pushed down by the user, converts it to an infrared signal to output the signal to an infrared communicating portion 18 of the digital broadcast receiver 1.

The direction keys 22 are pushed down in case where, for example, one option is selected from a plurality of options that are shown on the display 173 and the direction keys 22 are composed of four keys of an up direction key, a down direction key, a left direction key, and a right direction key. Further in the present embodiment, the left direction key and the right direction key among the direction keys 22 are keys which are pushed down in case where one country name identifying information is selected from a plurality of country name identifying information that are stored in a country name storing portion 123 which will be explained later. The enter key 23 is a key which is pushed down in case where the option that is selected by the direction keys 22 is decided, or the like.

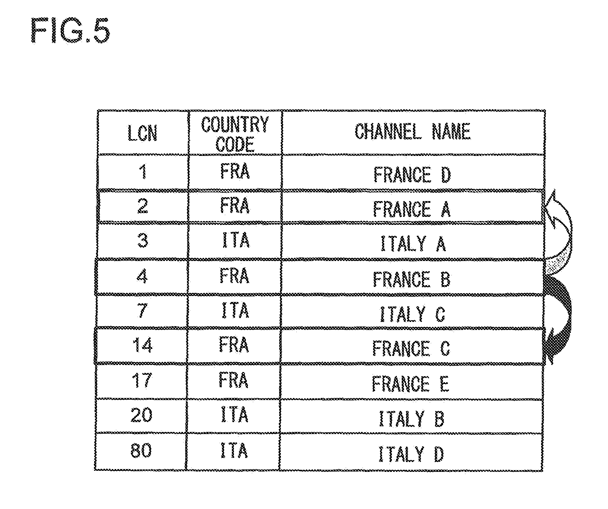

The channel change key 24 is composed of a channel up key and a channel down key. The channel change key 24 is a key which is pushed down in case where one channel number information is read out from a channel table (see, Fig. 5) to set the channel. The channel table is stored in advance in the RAM 12 that is shown in Fig. 1 or the like, and records the channel number information of receivable channels in numerical order. The channel up key is a key which is pushed down to set a channel number stored before the channel number being selected in the channel table, and having a country name identifying information selected by a country name selecting portion 114 which will be described later. The channel down key is a key which is pushed down to select a channel number stored after the channel number being selected, and having a country name identifying information selected by the country name selecting portion 114 which will be described later.

The menu key 25 is a key which is pushed down in case where a menu screen is displayed on which various kinds of setting and the like are performed. In the present embodiment, it is a key which is pushed down in case where logical channel number information that are extracted by a number extracting portion 115 which will be described later, is displayed on the display 173.

In the present embodiment, an explanation will be given to an example in which the MPU 11 reads out a control program stored in advance in the ROM 13 shown in Fig. 1 or the like and executes the program to function as a function portion of a receiving availability judging portion 111, a country name obtaining portion 112, a country name recording portion 113, a country name selecting portion 114, a number extracting portion 115, a display control portion 116, a channel setting portion 117, a channel changing portion 118 and the like, and to make the RAM 12 function as a function portion of a frequency storing portion 121, a channel storing portion 122, a country name storing portion 123 and the like.

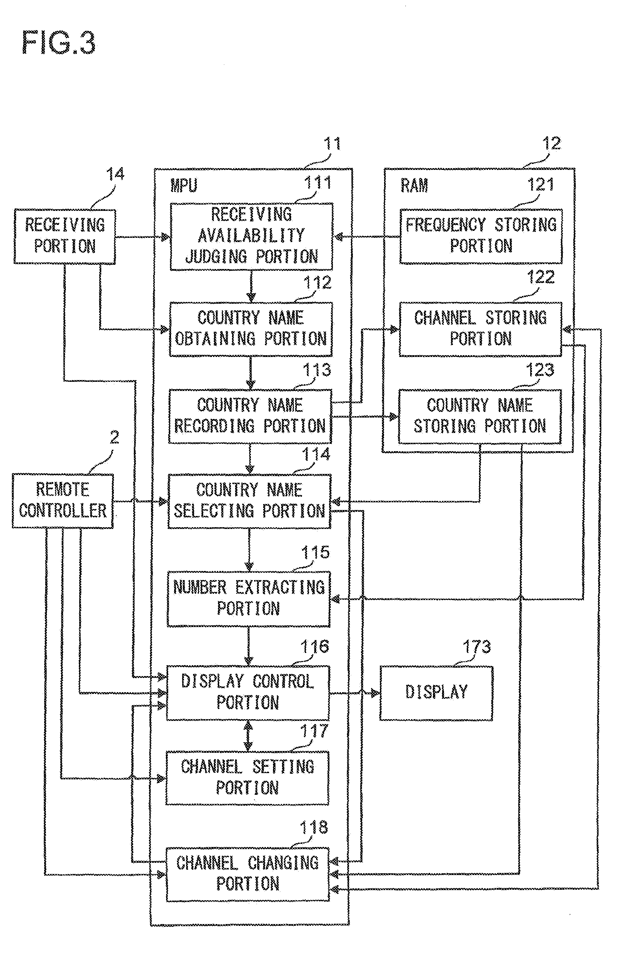

Fig. 3 is a block diagram to show one example of structure of a principal part of the digital broadcast receiver 1 in accordance with the present invention, The MPU 11 is provided with the receiving availability judging portion 111, the country name obtaining portion 112, the country name recording portion 113, the country name selecting portion 114, the number extracting portion 115, the display control portion 116, the channel setting portion 117, and the channel changing portion 118 as software as above described. The RAM 12 is provided with the frequency storing portion 121, the channel storing portion 122, and the country name storing portion 123.

Among various kinds of data stored in the RAM 12 and the ROM 13 shown in Fig. 1, data recordable in a removable recording medium may be read out by a driver for example, a hard disk drive, an optical disc drive, a flexible disk drive, a silicon disc drive, a cassette media readout system or the like. In such case, a recording medium may be, for example, a hard disk, an optical disc, a flexible disk, a compact disc (CD), a digital versatile disc (DVD), a semiconductor memory or the like.

The frequency storing portion 121 (corresponding to a frequency storing means) stores in advance a plurality of frequency band information such that each of information are associated with a physical channel number information: a physical channel number is a channel number regulating a frequency band.

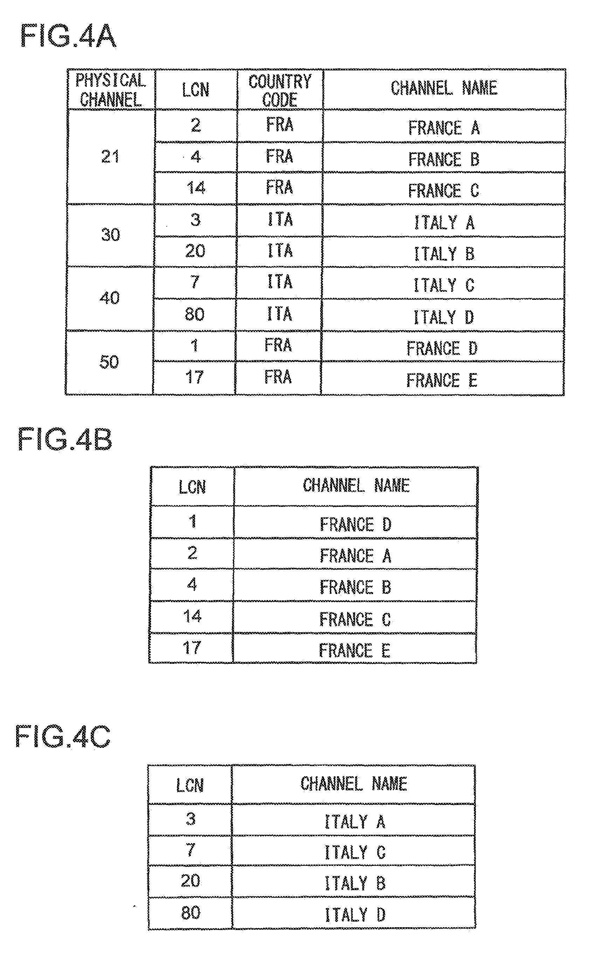

The channel storing portion 122 (corresponding to a channel storing means) associates a physical channel number (physical CH) information and logical channel number (LCN) information which correspond to a receivable television broadcast with the country name identifying information (country code) and channel name information and stores them as a "channel list" as shown in Fig. 4A. The physical channel number information, the logical channel number information, and the country name identifying information which are stored in the channel storing portion 122, are recorded (written in) by the country name recording portion 113, and read out by the number extracting portion 115 and the channel changing portion 118.

Fig. 4A is a graphic chart to show one example of the channel list which is stored in the channel storing portion 122. The graphic chart shows the physical channel number, the logical channel number, the country code (corresponding to a country same identifying information), and the channel name in this order from left side. In the physical channel number "21", for example, three logical channels: channel numbers of "2", "4", and "14" are included, and all these three logical channels have the country code "FRA" that means the television broadcasts are made for viewers who live in France as target object. Further, the channel names of the television broadcast which have the logical channel numbers "2", "4", and "14" are "France A", "France B", and "France C", respectively.

Further, for example, in the physical channel number "30", two logical channels: the channel numbers of "3" and "20" are included, and all these two logical channels have the country code "ITA" that means the television broadcasts are made for viewers who live in Italy as target object. Further, the channel names of the television broadcast which have the logical channel numbers "3" and "20" are "Italy A" and "Italy B", respectively.

Now back to Fig. 3 again, explanation will be given about function structure of principal part of the digital broadcast receiver. The country name storing portion 123 (corresponding to a country name storing means) stores a plurality of country name identifying information as viewer country name information that are country name identifying information of countries which correspond to television broadcasts that user desires to view. The country name identifying information which is stored in the country name storing portion 123, is recorded (written in) by the country name recording portion 113 and read out by the country name selecting portion 114 and the channel changing portion 118.

The receiving availability judging portion 111 (corresponding to a receiving availability judging means) judges whether a television broadcast can be received via the receiving portion 14 with respect to a frequency band of each of physical channels stored in the frequency storing portion 121. To be more concrete, the receiving availability judging portion 111 judges that television broadcast can be received in case where Bit Error Rate (BER) of broadcasting wave received via the receiving portion 14 is not more than a prescribed threshold value set in advance, for example, 10↑-7.

The country name obtaining portion 112 (corresponding to a country name obtaining means), in case where the receiving availability judging portion 111 judges a physical channel can be received, obtains a country name identifying information and channel name information with respect to each of logical channel numbers (LCNs) via the receiving portion 14: the LCNs are contained in a frequency band corresponding to the physical channel and correspond to channel numbers selected by a user, the country name identifying information identifying a country name of a country where target viewers of a television broadcast corresponding to each of the LCNs live, the channel name information are names of the logical channels.

To be more concrete, the country name obtaining person 112 obtains the country name identifying information based on a country code (country_code) information included in a Time Offset Table (TOT) information in a TS received via the receiving portion .14: the TOT is a table regulating a standard time for every country (see ETSI EN 300 468 V1.7.1 (2006∼05)).

In case where the receiving availability judging portion 111 judges that one physical channel is receivable, the country name obtaining portion 112 obtains the logical channel number information that correspond to channel numbers selected by a user via the receiving portion 14. That is, the country name obtaining portion 112 generates the channel information for the logical channels.

The country name recording portion 113 (corresponding to country name recording means) associates the country name identifying information and the channel name information which are obtained by the country name obtaining portion 112 with the physical channel number information and the logical channel number information and records (writes) them in the channel storing portion 122. Further, every time the country name identifying information is obtained by the country name obtaining portion 112, the country name recording portion 113 records (writes in) the obtained country name identifying information in the country name storing portion 123.

The country name selecting portion 114 (corresponding to a part of country name selecting means) receives the command input from user via the remote controller 2, and selects one of a plurality of the country name identifying information stored in the country name storing portion 123 based on the received command input. The country name selecting portion 114 selects one country name identifying information as a default value, for example, France, from the plurality of country name identifying information stored in the country name storing portion 123.

In the present embodiment, in a state where logical channel number information (see, Fig. 4B, Fig. 4C) extracted by the number extracting portion 115 are displayed on the display 173 by the display control portion 116, if the country name selecting portion 114 receives a push of the left direction key among the direction keys 22 arranged on the remote controller 2 shown in Fig. 2, the country name selecting portion 114 selects one country name identifying information, for example France, which is stored just before the country name identifying information being selected, for example Italy, from the plurality of country name identifying information which are stored in the country name storing portion 123. Further, if the country name selecting portion 114 receives a push of the right direction key among the direction keys 22 arranged on the remote controller 2 shown in Fig. 2, the country name selecting portion 114 selects one country name identifying information, for example Italy, which is stored just after the country name identifying information being selected, for example France, from the plurality of country name identifying information stored in the country name storing portion 123.

The country name selecting portion 114 selects a country name identifying information from country name identifying information stored in the country name storing portion 123. The number extracting portion 115 (corresponding to a number extracting means) extracts logical channel number information and channel name information being associated with a country name identifying information which is the same as the country name identifying information selected by the country name selecting portion 114 from logical channel number information stored in the channel storing portion 122.

In case where the display control portion 116 (corresponding to a part of display control means) receives a command input from user via the remote controller 2, that is, a push of the menu key 25 arranged on the remote controller 2 shown in Fig. 2, the display control portion 116 displays in a selectable manner the logical channel number information and the channel name information which are extracted by the number extracting portion 115 on the display 173 based on the received command input. Further, in case where one logical channel is set by the channel setting portion 117 or the channel changing portion 118, the display control portion 116 receives the television broadcast which corresponds to the set logical channel via the receiving portion 14, and displays the received video information on the display 173.

Fig 4B and Fig. 4C are graphic charts to show one example of the logical channel number information and the channel name information displayed in a selectable manner on the display 173 by the display control portion 116. Fig. 4B is a graphic chart to show one example of the logical channel number information and the channel name information which are displayed on the display 173 by the display control portion 116, when the channel list which is shown in Fig. 4A is stored in the channel storing portion 122, and if "FRA" is selected as the country name identifying information by the country name selecting portion 114. Fig. 4C is a graphic chart to show one example of the logical channel number information and the channel name information which are displayed on the display 173 by the display control portion 116, when the channel list which is shown in Fig. 4A is stored in the channel storing portion 122, and if "ITA" is selected as the country name identifying information by the country name selecting portion 114.

As shown in Fig. 4B and Fig. 4C, the logical channel number information sorted by their number information are associated with the channel name information and they are displayed on the display 173. Further, the channel setting portion 117 selects one of the logical channels from the graphic diagram shown in Fig. 4B (or Fig. 4C) to set a logical channel number to display the video information.

Now back to Fig. 3 again, explanation will be given about the function structure of principal part of the digital broadcast receiver. The channel setting portion 117 (corresponding to a part of channel setting means) receives the command input from user via the remote controller 2 and sets one logical channel number information as the logical channel number information to display the video information from the logical channel number information which are displayed on the display 173 by the display control portion 116 based on the received command input.

To be more concrete, if the channel setting portion 117 receives a push of the up direction key or the down direction key among the direction keys 22 arranged on the remote controller 2 shown in Fig. 2, the channel setting portion 117 shifts a selective state in a direction of the pushed direction-key. And if the channel setting portion 117 receives a push of the enter key 23, the channel setting portion 117 sets a logical channel number information being selected as a logical channel number to display the video information.

If the country name recording portion 113 records all physical channels stored in the frequency storing portion 121 in the channel storing portion 122 such that the country name identifying information and the channel name information which are obtained by the country name obtaining portion 112 are associated with the physical channel number information and the logical channel number information, that is, in case where the completed channel list is recorded in the channel storing portion 122, the channel changing portion 118 (corresponding to a part of channel changing means) sorts the channel list recorded in the channel storing portion 122 by the logical channel numbers, associates the sorted logical channel numbers with the country name identifying information and records them as a sorted channel list hereinafter referred to as a "sorted list" (see, Fig. 5) in the channel storing portion 122.

When the channel changing portion 118 receives a command input to increase a displayed channel number that is a logical channel number to display image on the display 174 via the remote controller 2 from a user, for example, when the channel changing portion 118 receives a push of the channel up key of channel change key 24 arranged on the remote controller 2 shown in Fig. 2, the channel changing portion 118 sets one of the logical channel number information of the sorted list stored in the channel storing portion 122 as a displayed channel number, the set logical channel number having a channel number which is larger than that of a logical channel number being selected as the displayed channel number, the set logical channel number being associated with a country name identifying information which is the same as the selected country name identifying information by the country name selecting portion 114, and the set logical channel number having the smallest absolute value of difference between a channel number thereof and that of the logical channel number being selected.

In addition, when the channel changing portion 118 receives a command input to decrease a displayed channel number that is a logical channel number to display image on the display 174 via the remote controller 2 from a user, for example, when the channel changing portion 118 receives a push of the channel down key of channel change key 24 arranged on the remote controller 2 shown in Fig. 2, the channel changing portion 118 sets one of the logical channel number information of the sorted list stored in the channel storing portion 122 as a displayed channel number, the set logical channel number having a channel number which is smaller than that of a logical channel number being selected as the displayed channel number, the set logical channel number being associated with a country name identifying information which is the same as the selected country name identifying information by the country name selecting portion 114, and the set logical channel number having the smallest absolute value of difference between a channel number thereof and that of the logical channel number being selected.

Fig. 5 is a graphic chart to show one example of the sorted list which corresponds to the channel list that is shown in Fig. 4A. The graphic chart shows the logical channel number, the country code (corresponding to a country name identifying information), and the channel name in this order from left side in the chart. For example, if the country name selecting portion 114 selects "France (FRA)" as a country name identifying information and a logical channel number of "4" is selected as a displayed channel number, and if the channel changing portion 118 receives a push of the channel up key of channel change key 24 arranged on the remote controller 2, the channel changing portion 118 alters the displayed channel number to a logical channel number of "14" with country name France and just after "4".

For example, if the country name selecting portion 114 selects "France (FRA)" as a country name identifying information and a logical channel number of "4" is selected as a displayed channel number, and if the channel changing portion 118 receives a push of the channel down key of channel change key 24 arranged on the remote controller 2, the channel changing portion 118 alters the displayed channel number to a logical channel number of "2" with country name France and just before "4".

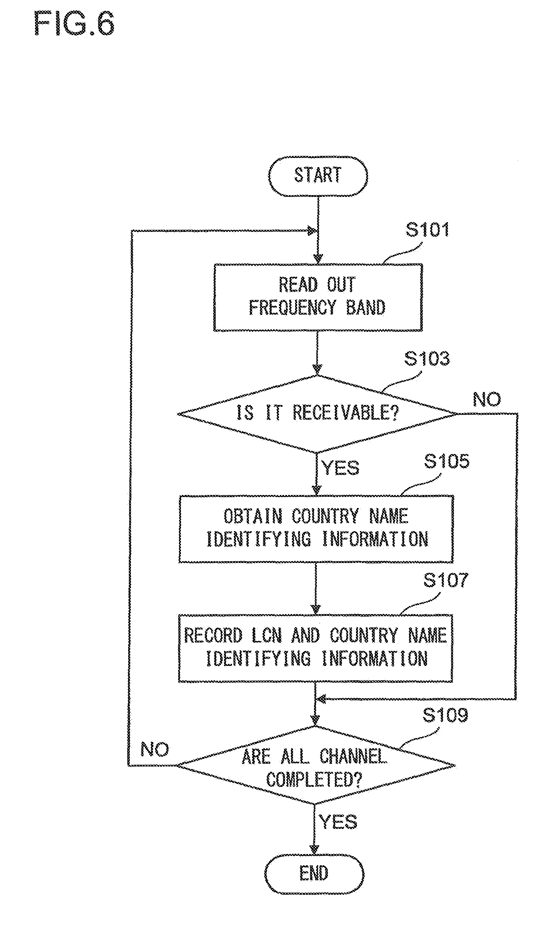

Fig. 6 is a flowchart to show one example of a channel list generating process of the digital broadcast receiving apparatus 1 mainly by the MPU 11. For the sake of convenience, in the present embodiment, explanation will be given about a case where a plurality of frequency band information are stored in advance in the frequency storing portion 121 such that each of the frequency band information are associated with a physical channel number information being a channel number regulating the frequency band. First, a frequency band which is stored in the frequency storing portion 121 is read out by the receiving availability judging portion 111 (S101). Then, the receiving availability judging portion 111 judges whether a television broadcast in the frequency band read out in step S101 is receivable or not (S103).

In case where the television broadcast is not judged to be received (NO in S103), the process is moved to step S109. In case where the television broadcast is judged to be received (YES in S103), a country name identifying, information and a channel name information which correspond to a logical channel are obtained by the country name obtaining portion 112 with respect to each logical channel (S105). Then, the country name identifying information and the channel name information which are obtained in step S105 are written in the channel storing portion 122 by the country name recording portion 113 (S107).

In case where the process of step S107 is completed, or in case where NO in step S103, the receiving availability judging portion 111 judges whether the judgment of receiving availability is completed with respect to all physical channels stored in the frequency storing portion 121 (S109). In case where the judgment of receiving availability is not judged to be completed with respect to all of the physical channels (NO in S109), the process is returned to step S101, the frequency band which corresponds to another physical channel is read out in step S101, and process after step S101 is executed again. In case where the judgment of receiving availability is judged to be completed with respect to all of the physical channels (YES in S109), the process is terminated.

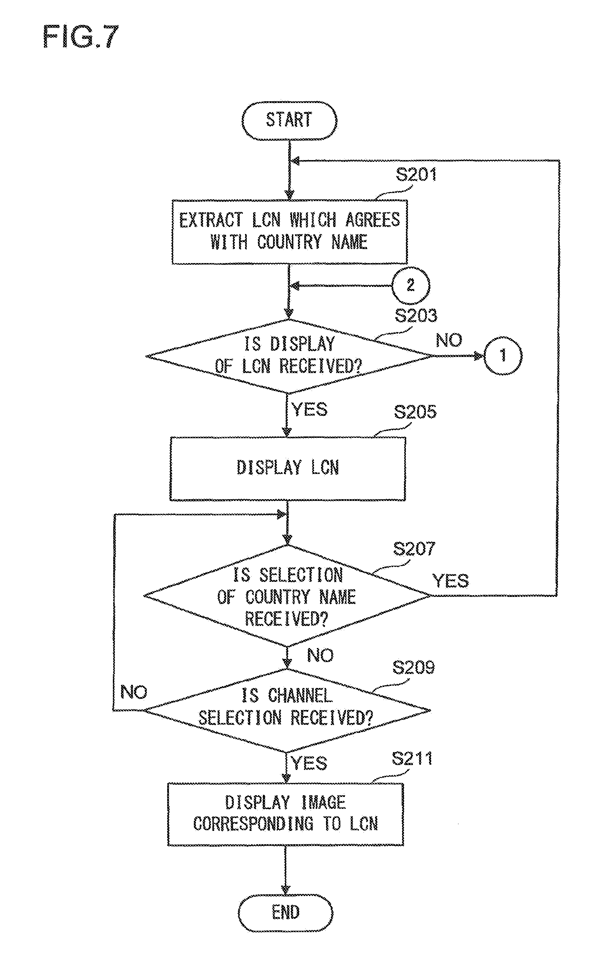

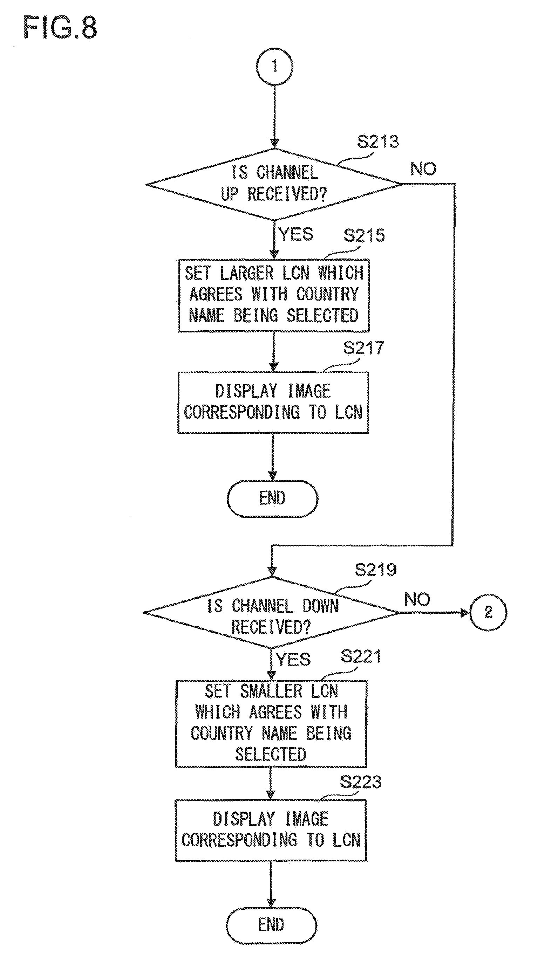

Fig. 7 and Fig. 8 are flowcharts to show one example of a channel setting change process of the digital broadcast receiver 1 mainly by the MPU 11. For the sake of convenience, in the present embodiment explanation will be given about a case where the sorted list is stored in advance in the channel storing portion 122 by the channel changing portion 118. First, logical channel number information and channel name information associated with a country name identifying information that is the same as a default value of the country name identifying information (for example, France) are extracted from logical channel number information which are stored in the channel storing portion 122 by the number extracting portion 115 (S201). Then, judgment is performed whether pushing down of the menu key 25 is received or not by the display control portion 116, that is, whether the command input that means to display the logical channel numbers is received or not (S203).

In case where it is judged that the command input that means to display the logical channel numbers is not received (NO in S203), the process is moved to step S213 shown in Fig. 8. In case where it is judged that the command input that means to display the logical channel numbers is received (YES in S203), logical channel number information and the channel name information which are extracted in step S201 are displayed in selectable manner on the display 173 by the display control portion 116 (S205). Then, judgment is performed whether one country name identifying information is selected from a plurality of the country name identifying information that are stored in the country name storing portion 123 by the country name selecting portion 114 or not, that is, whether pushing down of the left direction key or the right direction key of the direction keys 22 which are arranged on the remote controller 2 shown in Fig. 2 is received or not (S207).

In case where it is judge that the country name identifying information is selected (YES in S207), the process is returned to step S201, the logical channel number information and the channel name information associated with the country name identifying information that is the same as the country name identifying information which is set in step S207 are extracted by the number extracting portion 115 and process after step S201 is executed again. In case where it is judge that the country name identifying information is not selected (NO in S207), judgment is performed whether one logical channel number information is set as a logical channel number information to display a video information from the logical channel number information displayed on the display 173 in step S205 by the channel setting 117 (S209).

In case where it is judged that the logical channel number information are not set (NO in S209), the process is returned to step S207 and process after step S207 is executed again. In case where it is judged that the logical channel number information are set (YES in S209), the television broadcast which corresponds to the logical channel that is set in step S209 is received by the display control portion 116, the received video information is displayed on the display 173 (S211) and the process is terminated.

In case where NO in step S203, as shown in Fig. 8, judgment whether pushing down of the channel up key (the command input that means to increase the displayed channel number) is received or not by the channel changing portion 118 (S213). In case where it is judged that pushing down of the channel up key is not received (NO in S213), the process is moved to step S219. In case where it is judged that pushing down of the channel up key is received (YES in S213), a logical channel number information which has larger channel number than that of the logical channel number being selected as the displayed channel number and associated with the country name identifying information that is the same as the selected country name identifying information, is set by the channel changing portion 118 (S215). Then, the television broadcast which corresponds to the logical channel that is set in step S215 is received by the display control portion 116, the received video information is displayed on the display 173 (S217) and the process is terminated.

In case where NO in step S213, judgment is performed whether pushing down of the channel down key (the command input that means to decrease the displayed channel number) is received by the channel changing portion 118 or not (S219). In case where it is judged that pushing down of the channel down key is not received (NO in S219), the process is returned to step S203 shown in Fig. 7, and process after step S203 is executed again. In case where it is judged that pushing down of the channel down key is received (YES in S219), a logical channel number information which has smaller channel number than that of the logical channel number being selected as the displayed channel number and associated with the country name identifying information that is the same as the selected country name identifying information, is set by the channel changing portion 118 (S221). Then, the television broadcast which corresponds to the logical channel that is set in the S221 is received by the display control portion 116, the received video information is displayed on the display 173 (S223) and the process is terminated.

As above described, a plurality of frequency band information are stored in advance in the frequency storing portion 121 such that each of them are associated with a physical channel number information that is a channel number which regulates a frequency band; and a receiving availability of a television broadcast of a frequency band corresponding to a physical channel is judged via the receiving portion 14 for receiving television broadcasts of frequency bands set in advance with respect to each of the physical channels stored in the frequency storing portion 121. Then, in case where a television broadcast is judged to be receivable, a country name identifying information is obtained via the receiving portion 14 with respect to each of the logical channel contained in a frequency band corresponding to the physical channel and corresponding to channel numbers selected by a user: the country name identifying information identifies a country name of a country where target viewers of a television broadcast corresponding to the logical channel live, and the obtained country name identifying information is recorded in the channel storing portion 122 such that the information is associated with the physical channel number information and the logical channel number information. As a result, the receivable channel can be utilized with good convenience.

That is, because the country name identifying information that identifies a country name of a country where target viewers of the receivable television broadcast live is obtained, and the obtained country name identifying information is recorded in the channel storing portion 122 such that the obtained country name identifying information is associated with the physical channel number information and the logical channel number information, it becomes possible for user to view the television broadcast which includes the desired country name identifying information by designating a logical channel number information with reference to the country name identifying information that is stored in the channel storing portion 122. As a result the receivable channel can be utilized with good convenience.

Further, the country name identifying information is obtained based on country code information which is contained in TOT information that is a table to regulate standard time for every country. As a result, accurate country information can be easily obtained, and the receivable channel can be utilized with better convenience.

That is, because the country code (country_code) information is contained (see, ETSI EN 300 468 V1.7.1(2006-05)) in Local time offset descriptor to show offset time of the TOT information which is a table to regulate standard time for every country as it is defined in European Telecommunications Standards Institute (ETSI) that is standard for digital broadcasting in Europe, the country name identifying information is obtained based on the country code information that is contained in the TOT information. As a result, accurate country information can be obtained easily

In addition, at least one country name identifying information is stored is advance in the country name storing portion 123 as viewer country name information that is the country name identifying information of the country corresponding to the television broadcast which user desires to view; and logical channel number information associated with the country name identifying information which is the same as the country name identifying information that is stored in the country name storing portion 123 from logical channel number information which are stored in the channel storing portion 122 are extracted. Then, the command input from user is received via the remote controller 2, and the extracted logical channel number information are displayed on the display 173 based on the received command input. As a result, the receivable channel can be utilized with better convenience.

That is, because the logical channel number information associated with the country name identifying information which is the same as the country name identifying information that is stored in the country name storing portion 123 is extracted from the logical channel number information which are stored in the channel storing portion 122, and the extracted logical channel number information are displayed on the monitor based on the command input which is received from user via the remote controller 2, it becomes possible for user to view easily the television broadcast which the user desires to view by storing in advance the country name identifying information of the television broadcast which is desired to view in the channel storing portion 122. As a result, the receivable channel can be utilized with better convenience.

In addition, the command input from user is received via the remote controller 2, and one logical channel number information is set as a logical channel number information to display the video information from logical channel number information that are displayed on the display 173 based on the received command input. As a result, the receivable channel can be utilized with better convenience.

That is, because logical channel number information of television broadcast which includes the country name identifying information which user desires to view are displayed on the display 173, and one logical channel number information is set as a logical channel number information to display video information from the logical channel number information which are displayed on the display 173, the television broadcast which includes the country name identifying information that the user desires to view can be easily viewed. As a result, the receivable channel can be utilized with better convenience.

Further, a plurality of country name identifying information are stored in the country name storing portion 123 in advance; command input from user is received via the remote controller 2, and one country name identifying information is selected from the plurality of country name identifying information that are stored in the country name storing portion 123 based on the command input which is received; logical channel number information associated with the country name identifying information that is the same as one country name identifying information which is selected are extracted; and the extracted logical channel number information are displayed on the display 173. As a result, the receivable channel can be utilized with better convenience.

That is, in case where there are a plurality of country name identifying information of the television broadcast which the user desires to view, the plurality of country name identifying information are stored in advance in the channel storing portion 122. If one country name identifying information is selected from the plurality of country name identifying information that are stored in the country name storing portion 123, logical channel number information associated with a country name identifying information that is the same as the selected country name identifying information are extracted. And the extracted logical channel number information are displayed on the display 173, the television broadcast which includes the country name identifying information that the user desires to view can be easily viewed. As a result, the receivable channel can be utilized with better convenience.

Further, every time the country name identifying information is obtained the obtained country name identifying information is recorded in the country name storing portion 123. As a result, because it is not necessary for user to store the country name identifying information of the television broadcast which the user desires to view in the country name storing portion 123, the receivable channel can be utilized with better convenience.

In addition, a plurality of country name identifying information are stored in the country name storing portion 123 in advance as viewer country name information that is the country name identifying information of country which corresponds to a television broadcast that user desires to view; command input from the user is received via the remote controller 2 and one country name identifying information is selected from the plurality of country name identifying information that are stored in the country name storing portion 123 based on the command input which is received. In case where command input that means to increase the displayed channel number which is a logical channel number to display image on the display 173 from the user via the remote controller 2, that is, a push of the channel up key of the channel change keys 24 arranged on the remote controller 2 shown in Fig. 2 is received, one of the logical channel number information stored in the channel storing portion 122 is set as a displayed channel number, the set logical channel number information having a channel number which is larger than that of a logical channel number being selected as the displayed channel number, the set logical channel number information being associated with a country name identifying information which is the same as the country name identifying information selected from the plurality of country name identifying information stored in the country name storing portion 123, and the set logical channel number information having a smallest absolute value of difference between a channel number thereof and that of the logical channel number being selected. As a result, the receivable channel can be utilized with better convenience.

That is, in case where command input that means to increase the displayed channel number is received, that is, a push of the channel up key is received, because logical channel number information that have the country name identifying information which is the same as the selected country name information is set sequentially from logical channel number information which are stored in the channel storing portion 122, it becomes possible for user to set sequentially in ascending order logical channel number information corresponding to the television broadcast that contains the country name identifying information which the user desires to view by performing command input that means to increase the displayed channel number, that is, a push of the channel up key. As a result, the receivable channel can be utilized with better convenience.

Further, in case where command input that means to decrease the displayed channel number which is a logical channel number to display image on the display 173 from the user via the remote controller 2, that is, a push of the channel down key of the channel change keys 24 arranged on the remote controller 2 shown in Fig. 2 is received, one of logical channel number information stored in the channel storing portion 122 is set as a displayed channel number, the set logical channel number information having a channel number which is smaller than that of a logical channel number being selected as the displayed channel number, the set logical channel number information being associated with a country name identifying information which is the same as the country name identifying information selected from the plurality of country name identifying information stored in the country name storing portion 123, and the set logical channel number information having a smallest absolute value of difference between a channel number thereof and that of the logical channel number being selected. As a result, the receivable channel can be utilized with better convenience.

In case where command input that means to decrease the displayed channel number is received, that is, a push of the channel down key is received, because logical channel number information that have the country name identifying information which is the same as the selected country name information is set sequentially from the logical channel number information which are stored in the channel storing portion 122, it becomes possible for user to set sequentially in descending order the logical channel number information corresponding to the television broadcast that contains the country name identifying information which the user desires to view by performing command input that means to decrease the displayed channel number, that is, a push of the channel down key. As a result, the receivable channel can be utilized with better convenience.

In addition, it is judged that it is receivable in case where bit error rate of broadcasting wave which is received via the receiving portion 14 is not more than a prescribed threshold value (in this case 10↑-7) that is set in advance. As a result, receiving availability can be judged accurately and easily, and the receivable channel can be utilized with better convenience.

The present invention can be applied to below described embodiments.
(A) In the above described embodiment, explanation is given about a case where the digital broadcast receiving apparatus is a digital broadcast receiver 1 which receives digital broadcasting. However, the present invention may be applied to an embodiment in which the digital broadcast receiving apparatus receives both digital broadcasting and analog broadcasting.

(B) In the above described embodiment, explanation is given about a case where the MPU 11 is provided with the function portions such as the receiving availability judging portion 111, the country name obtaining portion 112, the country name recording portion 113, the country name selecting portion 114, the number extracting portion 115, the display control portion 116, the channel setting portion 117, the channel changing portion 118, and the like as software. However, the present invention may be applied to an embodiment in which at least one of the function portions out of the receiving availability judging portion 111, the country name obtaining portion 112, the country name recording portion 113, the country name selecting portion 114, the number extracting portion 115, the display control portion 116, the channel setting portion 117, and, the channel changing portion 118 is realized by a hardware such as a circuit or the like.

(C) In the above described embodiment, explanation is given about a case where the country name selecting portion 114 selects one country name identifying information which is stored just before or just after the country name identifying information being selected in case where the country name selecting portion 114 receives a push of the direction key 22 (the left direction key or the right direction key) in a state where the logical channel number information are displayed on the display 173 by the display control portion 116. However, the present invention may be applied to an embodiment in which the country name identifying information that is stored in the country name storing portion 123 is displayed in selectable manner on the display 173 in case where a specific key which is arranged on the remote controller 2 is pushed down, the country name selecting portion 114 receives command input from user via the remote controller 2 and selects one country name identifying information. In such a case, the country name identifying information which the user desires can be selected correctly.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A digital broadcast receiving apparatus which receives a digital television broadcast and displays the received video information on a monitor comprising:
a receiving means which receives a television broadcast of frequency band that is set in advance;
a frequency storing means which stores in advance a plurality of frequency band information such that each of the plurality of frequency band information are associated with a physical channel number information, a physical channel number being a channel number regulating a frequency band;
a receiving availability judging means which judges whether a television broadcast can be received via the receiving means with respect to a frequency band of each of physical channels stored in the frequency storing means;
a country name obtaining means which, in case where the receiving availability judging means judges a television broadcast can be received, obtains a country name identifying information via the receiving means with respect to each of logical channel numbers (LCNs): the LCNs being contained in a frequency band corresponding to the physical channel and corresponding to channel numbers selected by a user, the country name identifying information identifying a country name of a country where target viewers of a television broadcast corresponding to each of the LCNs live;
a channel storing means which stores the physical channel number information and logical channel number information that correspond to a receivable television broadcast such that the physical channel number information and logical channel number information are associated with the country name identifying information; and
a country name recording means which records the country name identifying information obtained by the country name obtaining means in the channel storing means such that the country name identifying information is associated with the physical channel number information and the logical channel number information.

2. The digital broadcast receiving apparatus according to claim 1, **characterized in that** the country name obtaining means obtains the country name identifying information based on a country code (country_code) information contained in a Time Offset Table (TOT) information: the TOT is a table to regulate a standard time for every country.

3. The digital broadcast receiving apparatus according to claim 1 or claim 2, further comprising:
a country name storing means which stores in advance the at least one country name identifying information as a viewer country name information that is the country name identifying information of the country corresponding to a television broadcast which user desires to view;
a number extracting means which extracts the logical channel number information being associated with a country name identifying information which is the same as the at least one country name identifying information stored in the country name storing means from the logical channel number information stored in the channel storing means; and
a display control means which displays the logical channel number information extracted by the number extracting means on the monitor based on a command input received from outside.

4. The digital broadcast receiving apparatus according to claim 3, further comprising:
a channel setting means which sets one of the logical channel number information displayed on the monitor by the display control means as a logical channel number information to display a video information based on a command input received from outside.

5. The digital broadcast receiving apparatus according to at least one of claims 1 to 4, **characterized in that:**
the country name storing means stores in advance the plurality of country name identifying information;
the apparatus further comprising a country name selecting means which selects one of the plurality of country name identifying information stored in the country name storing means based on a command input received from outside; and
the number extracting means extracts the logical channel number information being associated with a country name identifying information that is the same as the country name identifying information which is selected by the country name selecting means.

6. The digital broadcast receiving apparatus according to claim 1 or claim 2, further comprising:
a country name storing means which stores in advance the plurality of country name identifying information as viewer country name information being the country name identifying information of countries which correspond to television broadcasts that a user desires to view;
a country name selecting means which selects one of the country name identifying information stored in the country name storing means based on a command input received from outside; and
a channel changing means which, in case where a command input to increase a displayed channel number which is one of the logical channel numbers to display image on the monitor is received from outside, sets one of the logical channel number information stored in the channel storing means as the displayed channel number, the set logical channel number having a channel number which is larger than that of a logical channel number being selected as the displayed channel number, the set logical channel number being associated with a country name identifying information which is the same as the selected country same identifying information by the country name selecting means, and the set logical channel number having the smallest absolute value of difference between a channel number thereof and that of the logical channel number being selected.

7. The digital broadcast receiving apparatus according to claim 6, **characterized in that** in case where a command input to decrease a displayed channel number which is one of the logical channel numbers to display image on the monitor is received from outside, the channel changing means sets one of the logical channel number information stored in the channel storing means as a displayed channel number, the set logical channel number information having a channel number which is smaller than that of a logical channel number being selected as the displayed channel number, the set logical channel number information being associated with a country name identifying information which is the same as the selected country name identifying information by the country name selecting means, and the set logical channel number information having a smallest absolute value of difference between a channel number thereof and that of the logical channel number being selected.

8. The digital broadcast receiving apparatus according to any one of claim 3 to claim 7, **characterized in that** every time the country name obtaining means obtains the country name identifying information, the country name recording means records the obtained country name identifying information in the country name storing means.

9. The digital broadcast receiving apparatus according to any one of claim 1 to claim 8, **characterized in that** the receiving availability judging means judges that television broadcast can be received in case where Bit Error Rate (BER) of broadcasting wave received via the receiving means is not more than a prescribed threshold value set in advance.
